(19)

Europäisches
Patentamt
European
Patent Office
Office européen
des brevets

(11)  **EP 4 386 100 A1**

(12)  **EUROPEAN PATENT APPLICATION**
published in accordance with Art. 153(4) EPC

(43) Date of publication:
**19.06.2024  Bulletin 2024/25**

(21) Application number: **22856192.4**

(22) Date of filing: **09.08.2022**

(51) International Patent Classification (IPC):
*C22C 38/02* (2006.01)    *C22C 38/04* (2006.01)
*C22C 38/16* (2006.01)    *C22C 38/06* (2006.01)
*C22C 38/00* (2006.01)    *C22C 38/58* (2006.01)
*C21D 8/12* (2006.01)

(52) Cooperative Patent Classification (CPC):
**C21D 8/12; C22C 38/00; C22C 38/02; C22C 38/04;
C22C 38/06; C22C 38/16; C22C 38/58; H01F 1/147**

(86) International application number:
**PCT/KR2022/011879**

(87) International publication number:
**WO 2023/018195 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.08.2021  KR 20210104667**

(71) Applicant: POSCO Co., Ltd
**Pohang-si, Gyeongsangbuk-do 37859 (KR)**

(72) Inventors:
• **PARK, Junesoo
  Pohang-si, Gyeongsangbuk-do 37859 (KR)**
• **HONG, Jaewan
  Pohang-si, Gyeongsangbuk-do 37859 (KR)**
• **SONG, Dae Hyun
  Pohang-si, Gyeongsangbuk-do 37859 (KR)**

(74) Representative: **Meissner Bolte Partnerschaft
mbB
Patentanwälte Rechtsanwälte
Postfach 86 06 24
81633 München (DE)**

(54)  **NON-ORIENTED ELECTRICAL STEEL SHEET AND METHOD FOR MANUFACTURING SAME**

(57)  An exemplary embodiment of the present invention provides a non-oriented electrical steel sheet and a method for manufacturing same. The non-oriented electrical steel sheet comprises, by wt%, 2.5-4% of Si, 0.1-1.0% of Mn, 0.001-0.005% of S, 0.002-0.01% of Cu, and the remainder of Fe and inevitable impurities, wherein FGS (average grain size of grains in the lower 10% or less based on grain size among total grains) $\geq$ 15 $\mu$m.

EP 4 386 100 A1

## Description

### [Technical Field]

An exemplary embodiment of the present invention relates to a non-oriented electrical steel sheet and a method for manufacturing the same. More specifically, the present invention relates to a non-oriented electrical steel sheet with excellent iron loss by uniformalizing a microstructure and a method for manufacturing the same.

### [Background Art]

Recently, as regulations on environmental preservation and energy saving have been strengthened, there is an increasing demand for improving the efficiency of a motor or generator, which is an energy conversion device that converts electrical energy into mechanical energy or mechanical energy into electrical energy. Since the non-oriented electrical steel sheet is a material used as an iron core material in rotating devices such as motors and generators and stationary devices such as small transformers, the demand for improving the efficiency of the motor or generator leads to a demand for improving the characteristics of the non-oriented electrical steel sheet.

The representative magnetic properties of the non-oriented electrical steel sheet are iron loss and magnetic flux density, and as the iron loss of the non-oriented electrical steel sheet is lowered, the iron loss lost in the process of magnetizing the iron core is reduced and the efficiency is improved, and as the magnetic flux density is higher, a larger magnetic field may be induced with the same energy and the energy efficiency may be improved because a small amount of current is applied to obtain the same magnetic flux density. Accordingly, in order to improve energy efficiency, it may be required for the development technology of a non-oriented electrical steel sheet having excellent magnetic properties with low iron loss and high magnetic flux density.

When describing the characteristics of the non-oriented electrical steel sheet in more detail, as an effective method for lowering the iron loss of the non-oriented electrical steel sheet, there is a method of increasing the addition amount of Si, Al, or Mn, which are elements having high resistivity, or reducing the thickness of the steel sheet. However, thin steel sheets have a disadvantage of increasing processing costs due to poor productivity and processibility, and an increase in the addition amount of Si, Al, and Mn increases the resistivity of the steel and reduces the eddy current loss among the iron losses of the non-oriented electrical steel sheet, thereby reducing the iron loss. However, as the addition amount increases, the iron loss does not unconditionally decrease in proportion to the addition amount, and on the contrary, an increase in the addition amount of alloy elements deteriorates the magnetic flux density, so that in order to secure excellent iron loss and magnetic flux density, it is necessary to properly control an appropriate addition amount and an addition ratio between the addition amounts of Si, Al, and Mn. Inevitably contained impurities other than Si, Al, and Mn need to be more strictly controlled. Most of the impurities form precipitates with C, N, S, etc. to suppress the growth of grains or impede the magnetic domain wall motion, thereby deteriorating the magnetic properties, so that it is very important to control the contents thereof.

To improve the magnetic flux density while lowering the iron loss of the non-oriented electrical steel sheet, there have been attempts of technologies of using special additive elements such as REM to improve a texture and improve magnetic properties, or introducing additional manufacturing processes such as warm rolling, twice rolling, twice annealing, and the like. However, since all of these technologies cause an increase in manufacturing cost or have difficulties in mass production, it is necessary to develop a technology that is excellent in magnetic properties and easy to produce commercially. In addition, technologies for suppressing and controlling the formation of inclusions by suppressing the addition of impurities as much as possible and adding elements such as Ca have been developed, but these technologies also cause a rise in manufacturing cost and are not easy to clearly secure the effects.

There have been continuous efforts to solve these problems and many technologies have been developed. Among the prior arts for the non-oriented electrical steel sheet, Japanese Patent Publication No. 2016-199787 provides a method for securing excellent magnetic properties by controlling the heating rate to 50°C/s or more to improve the texture during the final annealing of the non-oriented electrical steel sheet. However, separately from the result of improving the texture by performing rapid heating, the part where the magnetic properties may be inferior due to the non-uniformity of the microstructure is not considered.

Existing technologies present a technology capable of improving magnetic properties through inclusion control, texture improvement, etc. by suppressing impurities such as S, As, Nb, Ti, etc. among the components as much as possible and controlling the annealing conditions of a hot-rolled sheet. However, it may be considered as a technology that is difficult to be applied commercially due to an increase in manufacturing cost for the maximum suppression of impurities and the long annealing time of the hot-rolled sheet.

In addition, the prior art presents a method capable of obtaining a high-strength steel sheet before stress relief annealing and a steel sheet with low iron loss due to the ease of grain growth during annealing by reducing specific impurity elements contained in the steel to a very low level and adding a skin pass process but has a disadvantage of causing a cost increase for extremely low management of impurities.

In addition, there is presented a technology in which the precipitation of MnS is suppressed by adding rare earth elements such as Ca, Mg, and REM, and then the grains are small before stress relief, but the grains grow during stress relief annealing to have excellent iron loss. However, this technology is also accompanied by an increase in manufacturing cost for the addition and control of additional elements, and it is difficult to secure the effect when the stress relief annealing is not performed.

**[Disclosure]**

**[Technical Problem]**

The present disclosure attempts to provide a non-oriented electrical steel sheet with excellent magnetic properties through uniform control of a microstructure by optimally controlling the components of steel and optimizing a manufacturing method.

**[Technical Solution]**

According to an exemplary embodiment of the present invention, a non-oriented electrical steel sheet may include, by wt%, 2.5 to 4% of Si, 0.1 to 1.0% of Mn, 0.001 to 0.005% of S, 0.002 to 0.01% of Cu, and the remainder of Fe and inevitable impurities.

The non-oriented electrical steel sheet may have FGS (average grain size of grains in the lower 10% or less based on grain size among total grains) $\geq$ 15 $\mu$m.

The non-oriented electrical steel sheet may further include, by wt%, at least one of 0.005% or less of C, 0.5 to 1.5% of Al, 0.005% or less of N, 0.2% or less of P, 0.2% or less of Sn, and 0.005% or less of Ti.

The non-oriented electrical steel sheet may further include, by wt%, at least one of 0.2% or less of Sb, 0.05% or less of Ni, 0.05% or less of Cr, 0.01% or less of Zr, 0.01% or less of Mo, and 0.01% or less of V.

The non-oriented electrical steel sheet may have FGS (average grain size of grains in the lower 10% or less based on grain size among total grains)/GS (average grain size of total grains) $\geq$ 0.15.

The non-oriented electrical steel sheet may have FGA (average area of grains in the lower 10% or less based on grain size among total grains)/TGA (average area of total grains) $\geq$ 0.005.

The composition of the non-oriented electrical steel sheet may satisfy Equation 1 below.

$$[\text{Equation 1}]$$

$$0.4 \leq ([\text{Mn}]+10\times[\text{Cu}])\times 1000\times[\text{S}] \leq 1.5$$

(Here, [Mn], [Cu], and [S] are the addition amounts (wt%) of Mn, Cu, and S, respectively)

According to another exemplary embodiment of the present invention, a method for manufacturing a non-oriented electrical steel sheet may include preparing a hot-rolled sheet by hot-rolling a slab comprising, by wt%, 2.0 to 4.0% of Si, 0.1 to 1.0% of Mn, 0.001 to 0.005% of S, 0.002 to 0.01% of Cu, and the remainder of Fe and inevitable impurities; preparing a cold-rolled sheet by cold-rolling the hot-rolled sheet; and annealing the cold-rolled sheet, in which in the cold-rolled sheet annealing step, an average heating rate from 600°C to the cracking temperature may be 15 to 50°C/s, and an average cooling rate from the cracking temperature to 600°C may be 10 to 40°C/s.

The heating rate and the cooling rate may satisfy Equation 2 below.

$$[\text{Equation 2}] \quad 200 \leq ([\text{heating rate}] \times [\text{cooling rate}]) \leq 500$$

(Here, [heating rate] and [cooling rate] are an average heating rate and an average cooling rate between 600°C and the maximum temperature during cold-rolled sheet annealing, respectively, and the unit is °C/s)

The slab may further include, by wt%, at least one of 0.005% or less of C, 0.5 to 1.5% of Al, 0.005% or less of N, 0.1% or less of P, 0.1% or less of Sn, and 0.005% or less of Ti.

The slab composition may satisfy Equation 1 below.

[Equation 1]

$$0.4 \leq ([Mn] + 10 \times [Cu]) \times 1000 \times [S] \leq 1.5$$

(Here, [Mn], [Cu], and [S] are the addition amounts (wt%) of Mn, Cu, and S, respectively)

In the annealing of the cold-rolled sheet, the cracking temperature may be 900 to 1100°C.

The method of manufacturing the non-oriented electrical steel sheet may further include coating an insulating film on the annealed cold-rolled sheet.

**[Advantageous Effects]**

According to an exemplary embodiment of the present invention, it is possible to provide a non-oriented electrical steel sheet in which a component system is optimally controlled.

In addition, according to an exemplary embodiment of the present invention, it is possible to optimize manufacturing conditions of the non-oriented electrical steel sheet.

Further, according to an exemplary embodiment of the present invention, it is possible to provide a non-oriented electrical steel sheet having a more uniformly controlled microstructure after cold-rolled sheet annealing.

Further, according to an exemplary embodiment of the present invention, it is possible to provide a non-oriented electrical steel sheet with excellent iron loss.

**[Mode for Invention]**

Terms such as first, second and third are used to describe various parts, components, regions, layers and/or sections, but are not limited thereto. These terms are only used to distinguish one part, component, region, layer or section from another part, component, region, layer, or section. Accordingly, a first part, component, region, layer, or section to be described below may be referred to as a second part, component, region, layer, or section without departing from the scope of the present invention.

The terms used herein is for the purpose of describing specific exemplary embodiments only and are not intended to be limiting of the present invention. The singular forms used herein include plural forms as well, if the phrases do not clearly have the opposite meaning. The "comprising" used in the specification means that a specific feature, region, integer, step, operation, element and/or component is embodied and other specific features, regions, integers, steps, operations, elements, components, and/or groups are not excluded.

When a part is referred to as being "above" or "on" the other part, the part may be directly above or on the other part or may be followed by another part therebetween. In contrast, when a part is referred to as being "directly on" the other part, there is no intervening part therebetween.

In addition, unless otherwise specified, % means wt%, and 1 ppm is 0.0001 wt%.

In an exemplary embodiment of the present invention, the meaning of further including an additional element means replacing and including iron (Fe), which is the remainder by an additional amount of an additional element.

Unless defined otherwise, all terms including technical and scientific terms used herein have the same meaning as commonly understood by those skilled in the art to which the present invention belongs. Commonly used predefined terms are further interpreted as having a meaning consistent with the relevant technical literature and the present invention and are not to be construed as ideal or very formal meanings unless defined otherwise.

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention.

The most efficient method for lowering the iron loss in a non-oriented electrical steel sheet is to increase the resistivity of the steel by adding silicon (Si), aluminum (Al), or manganese (Mn). However, when Si, Al, Mn, etc. are added to Fe, the iron loss decreases, but a decrease in saturation magnetic flux density cannot be avoided, and in a high-alloy system with a large addition amount of Si, Al, and Mn, it is difficult to secure productivity due to deterioration of a cold rolling property due to increased brittleness of the material. Accordingly, in order to secure productivity while having characteristics of low iron loss and high magnetic flux density, an appropriate combination of addition amounts and ratios of Si, Al, and Mn is required.

Copper (Cu) and sulfur (S) are elements that need to be added in small amounts or managed in an extremely low added amount depending on the purpose. In the non-oriented electrical steel sheet, precipitates and inclusions inhibit the growth of grains and impede the magnetic domain wall motion, thereby deteriorating the magnetic properties.

Therefore, in the case of Cu and S, since sulfides are formed with Mn to make the distribution of grains non-uniform, and the fine sulfides themselves may deteriorate magnetic properties, the addition amounts thereof need to be appropriately controlled.

A non-oriented electrical steel sheet according to an exemplary embodiment of the present invention may include, by wt%, 2.5 to 4% of Si, 0.1 to 1.0% of Mn, 0.001 to 0.005% of S, 0.002 to 0.01% of Cu, and the remainder of Fe and inevitable impurities, in which the remainder may include Fe and other inevitable impurities.

The non-oriented electrical steel sheet according to an exemplary embodiment of the present invention may further include, by wt%, at least one of 0.005% or less of C, 0.5 to 1.5% of Al, 0.005% or less of N, 0.2% or less of P, 0.2% or less of Sn, and 0.005% or less of Ti.

The non-oriented electrical steel sheet according to an exemplary embodiment of the present invention may further include, by wt%, at least one of 0.2% or less of Sb, 0.05% or less of Ni, 0.05% or less of Cr, 0.01% or less of Zr, 0.01% or less of Mo, and 0.01% or less of V.

Hereinafter, reasons for limiting the components of the non-oriented electrical steel sheet will be described.

Si: 2.5 to 4.0 wt%

Silicon (Si) serves to lower iron loss by increasing the resistivity of a material, and if too little Si is added, an effect of improving iron loss may be insufficient. Accordingly, when 2.5 wt% or more of the Si content is added, it is advantageous for the development of a non-oriented electrical steel sheet with low iron loss. Conversely, if too much Si is added, the brittleness of the material increases, resulting in coil breakage during winding and cold rolling, which may lead to a rapid decrease in rolling productivity. Accordingly, Si may be added within the aforementioned range. More specifically, Si may be included in an amount of 2.6 to 3.7 wt%.

Mn: 0.10 to 1.00 wt%

Manganese (Mn) serves to increase the resistivity of the material to improve iron loss and form sulfides, but if too little Mn is added, sulfide is precipitated finely to deteriorate magnetic properties. On the contrary, if too much Mn is added, the formation of a {111} texture against magnetic properties is made to reduce the magnetic flux density. Accordingly, Mn may be added within the aforementioned range. More specifically, Mn may be included in an amount of 0.20 to 0.60 wt%.

Al: 0.5 to 1.5 wt%

Aluminum (Al) serves to lower iron loss by increasing the resistivity of a material, has the effect of improving rollability or improving workability during cold rolling, and may reduce the magnetic deviation between a rolling direction and a rolling vertical direction by reducing the magnetic anisotropy. However, if too little Al is added, there is no effect on reducing high-frequency iron loss, and the precipitation temperature of AlN is lowered, so that nitrides are finely formed to deteriorate the magnetic properties. On the contrary, if much Al is added, nitrides are excessively formed to deteriorate magnetic properties and cause problems in all processes such as steelmaking and continuous casting, thereby greatly reducing productivity. Accordingly, Al may be added within the aforementioned range. More specifically, Al may be included in an amount of 0.7 to 1.0 wt%.

C: 0.0050 wt% or les

Carbon (C) inhibits the growth of ferrite grains during annealing to increase the degree of deterioration of magnetic properties during processing, and may form carbides by binding with Ti, Nb, etc. to deteriorate the magnetic properties, and may be 0.0040 wt% or less because iron loss increases due to magnetic aging to reduce the efficiency of electric devices when used after processing from final products to electrical products.

S: 0.0010 to 0.0050 wt%

Sulfur (S) forms fine sulfides such as MnS, CuS, and (Cu, Mn)S, which are harmful to magnetic properties, inside a base material to suppress the grain growth and reduce iron loss, so that it is preferable to add S at a low level. However, when S is added at less than 0.0010 wt%, it is rather disadvantageous for the formation of the texture, and the formation of fine sulfides is promoted to deteriorate the magnetic properties, so that it is preferable to contain 0.001% or more. In addition, when the content exceeds 0.0050 wt%, the grain growth may be suppressed due to increased generation of sulfides or the degree of deterioration of magnetic properties after processing may be increased, so that S may be added within the aforementioned range. More specifically, S may be included in an amount of 0.0013 to 0.0040 wt%.

N: 0.0040 wt% or less

Nitrogen (N) is strongly bound with Al, Ti, Nb, etc. to form nitrides inside the base material, thereby deteriorating iron loss such as suppressing the grain growth and the like, so that it is preferable to contain N less and in the present invention, the content of N may be limited to 0.0040 wt% or less. More specifically, N may be included in an amount of 0.0005 to 0.0035 wt%.

Ti: 0.0050 wt% or less

Titanium (Ti) is an element having a very strong tendency to form precipitates in steel, and is bound with C and N to form fine carbides or nitrides inside the base material to suppress the grain growth. The more Ti is added, the more carbides and nitrides are formed, and then the texture is inferior, and the iron loss deteriorates, thereby deteriorating magnetic properties, so that the Ti content may be limited to 0.0050 wt% or less. More specifically, Ti may be included in an amount of 0.0010 to 0.0040 wt%.

Cu: 0.0020 to 0.0100%

Copper (Cu) is bound with Mn and S to form fine sulfides. However, when Cu is added at less than 0.002%, Cu promotes the formation of fine sulfides to deteriorate magnetic properties, so that Cu may be contained at 0.002% or more. In addition, since sulfides increase when added at more than 0.01%, the content of Cu may be 0.0020 to 0.0100 wt%. More specifically, Cu may be included in an amount of 0.0050 to 0.0080 wt%.

In addition to the elements, P, Sn, and Sb, which are generally known as elements to improve the texture, may be added for additional improvement of magnetic properties. However, if the addition amount is too large, there is a problem of inhibiting the grain growth and reducing productivity, so that each addition amount thereof may be 0.2% or less. In the case of Ni and Cr, elements that are inevitably added in the steelmaking process, Ni and Cr react with impurity elements to form fine sulfides, carbides, and nitrides, which have a harmful effect of magnetic properties, so that their contents may be limited to 0.05 wt% or less, respectively. In addition, since Zr, Mo, V, etc. are also strong carbonitride forming elements, it is preferable not to be added as little as possible, and each content may be limited to 0.01 wt% or less.

The remainder other than the elements may include Fe and other inevitable impurities. In addition to the aforementioned elements, additional elements may be added within a range without impairing the technical spirit of the present invention. In this case, Fe as the remainder is replaced and added. It is also possible to limit the addition of additional elements. An example of the additional element may further include at least one of 0.2% or less of Sb, 0.05% or less of Ni, 0.05% or less of Cr, 0.01% or less of Zr, 0.01% or less of Mo, and 0.01% or less of V.

That is, the non-oriented electrical steel sheet according to an exemplary embodiment of the present invention may consist of 2.5 to 4% of Si, 0.1 to 1.0% of Mn, 0.001 to 0.005% of S, 0.002 to 0.01% of Cu, and the remainder of Fe and inevitable impurities.

In addition, in the non-oriented electrical steel sheet according to an exemplary embodiment of the present invention, Mn, Cu, and S may satisfy Equation 1 below.

[Equation 1]

$$0.40 \leq ([Mn]+10 \times [Cu]) \times 1000 \times [S] \leq 1.5$$

(Here, [Mn], [Cu], and [S] are the addition amounts (wt%) of Mn, Cu, and S, respectively)

In the present invention, the reason why Mn, Cu, and S are controlled to satisfy [Equation 1] is as follows. In general, in the non-oriented electrical steel sheet, Mn is an element to be added to increase the resistivity together with Si and Al, and sulfide is mainly known as MnS. However, Cu is also an element that forms sulfides, and may form sulfides with CuS alone or in combination with MnS. These sulfides precipitate finely to suppress the grain growth, thereby making the microstructure non-uniform, and to impede the magnetic domain wall motion during magnetization, thereby deteriorating magnetic properties. The effect of fine sulfides rather than coarse sulfides further deteriorates the magnetic properties. In addition, in general, the added amount of Cu is smaller than that of Mn, but the smaller the amount added, the lower the precipitation temperature and Cu is finely precipitated. Accordingly, in addition to the existing control of Mn and S addition amounts, since the addition amount of Cu needs to be strictly controlled, the non-oriented electrical steel sheet controlled so that the contents of Mn, Cu, and S satisfy [Equation 1] may uniformalize a microstructure. More specifically, the values of Equation 1 may be 0.70 to 1.50.

The non-oriented electrical steel sheet may have FGS (average grain size of grains in the lower 10% or less based on grain size among total grains) $\geq$ 15 $\mu$m. Specifically, FGS may be 15 to 30 $\mu$m, more specifically 20 to 25 $\mu$m.

More specifically, the FGS means an average grain size of grains when there are grains in 10% or less small grain size based on grain size among total grains included in the area of the steel sheet to be measured. For example, assuming that the number of grains to be measured is 100, the FGS means the average grain size of grain groups consisting of the smallest grains to 10th smallest grains (i.e., the first to 10th grain groups). Here, the average grain size means the number average grain size. As the FGS increases, hysteresis loss among generated iron losses decreases and thus iron loss improves. The grains to be measured may have the grain size of 5 $\mu$m or more.

The standard for measuring the grain size is not particularly limited and may be a face parallel to a rolling face (ND face). The grain size does not substantially vary in the sheet thickness direction, but may be measured at a thickness between 1/5 t and 1/2 t. The grain size is measured by the diameter of a circle assuming an imaginary surface having the same area as the grain.

Since a deviation therebetween may be large when measured in a small area, the FGS may be measured from specimens having an area of at least 5 mm $\times$ 5 mm.

More specifically, the FGS may also be measured by directly photographing the microstructure to utilize an image analyzer or using an EBSD program.

The non-oriented electrical steel sheet may have FGS (average grain size of grains in the lower 10% or less based on grain size among total grains)/GS (average grain size of total grains) $\geq$ 0.15. Specifically, FGS/GS may be 0.15 to 0.25, more specifically 0.15 to 0.2.

The non-oriented electrical steel sheet may have FGA (average area of grains in the lower 10% or less based on grain size among total grains)/TGA (average area of total grains) $\geq$ 0.005. Specifically, FGA/TGA may be 0.005 to 0.02, more specifically 0.005 to 0.0015.

In addition, in the non-oriented electrical steel sheet, when a magnetic flux density of 1.5 T is induced at a frequency of 50 Hz, iron loss $W_{15/50}$, which is an average loss in a rolling direction and a vertical direction of the rolling direction, may be 2.0 W/kg or less. Specifically, $W_{15/50}$ may be 1.5 to 2.0 W/kg, more specifically 1.8 to 2.0 W/kg.

In the non-oriented electrical steel sheet, when a magnetic flux density of 1.0 T is induced at a frequency of 400 Hz, iron loss $W_{10/400}$, which is an average loss in a rolling direction and a vertical direction of the rolling direction, may be 16.5 W/kg or less. Specifically, $W_{10/400}$ may be 10.0 to 16.5 W/kg, more specifically 15.0 to 16.5 W/kg.

The method for manufacturing the non-oriented electrical steel sheet according to an exemplary embodiment of the present invention includes hot-rolling a slab; cold-rolling a hot-rolled sheet; and annealing a cold-rolled sheet. The annealing of the hot-rolled sheet may be added if necessary and may include a plurality of cold rolling including intermediate annealing to further improve magnetic properties. Examples of the manufacturing method below are only examples and do not necessarily correspond thereto.

For example, a method for manufacturing a non-oriented electrical steel sheet of the present invention may include heating a slab including, by wt%, 0.005% or less of C, 2.0 to 4.0% of Si, 0.1 to 1.0% of Mn, 0.001 to 0.005% of S, 0.5 to 1.5% of Al, 0.005% or less of N, 0.005% or less of Ti, 0.002 to 0.01% of Cu, and the remainder of Fe and inevitable impurities; forming a hot-rolled sheet by hot-rolling the slab; forming a cold-rolled sheet by cold-rolling the hot-rolled sheet; and annealing the cold-rolled sheet.

Among the compositions of the slab, Mn, Cu, and S may satisfy the following [Equation 1].

$$[\text{Equation 1}]$$

$$0.4 \leq ([\text{Mn}] + 10 \times [\text{Cu}]) \times 1000 \times [\text{S}] \leq 1.5$$

(Here, [Mn], [Cu], and [S] are the addition amounts (wt%) of Mn, Cu, and S, respectively)

Thereafter, since there is no substantial change in the steel composition during the manufacturing process of the non-oriented electrical steel sheet, the composition of the slab and the composition of the aforementioned non-oriented electrical steel sheet are substantially the same as each other. With respect to the composition of the slab, the duplicated description will be omitted.

The method may further include heating the slab before the preparing of the hot-rolled sheet. The heating of the slab may be heating at 1200°C or less. Specifically, the heating of the slab may be heating at 950 to 1200°C, more specifically at 1000 to 1200°C. When the reheating temperature of the slab is more than 1200°C, precipitates such as nitrides, carbides, and sulfides present in the slab are re-dissolved, and then finely precipitated during hot rolling and annealing to suppress grain growth and reduce magnetic properties, and thus, the slab heating temperature may be controlled to 1200°C or less.

In the forming of the hot-rolled sheet by hot-rolling the slab, the thickness of the formed hot-rolled sheet may be 2.0 to 3.0 mm. Specifically, the thickness of the hot-rolled sheet may be 2.3 to 2.5 mm.

The formed hot-rolled sheet may be wound at 700°C or less and cooled in air.

In the wound hot-rolled sheet, the hot-rolled sheet annealing step may be omitted, or the hot-rolled sheet annealing step may be performed. The hot-rolled sheet annealing step may be performed at 950 to 1150°C. Specifically, the hot-rolled sheet annealing step may be performed at 975 to 1025°C. When the temperature is less than 950°C in the annealing step of the hot-rolled sheet, it is difficult to obtain a texture favorable to magnetic properties during annealing after cold rolling due to insufficient grain growth, and when the temperature is more than 1150°C, the grains grow excessively, and the surface defects of the sheet may be excessive.

The method of manufacturing the non-oriented electrical steel sheet may further include pickling the annealed hot-rolled sheet after the hot-rolled sheet annealing step. The pickling of the annealed hot-rolled sheet may be performed by a conventional pickling method.

The cold-rolling of the hot-rolled sheet may be performing once cold rolling or twice or more cold rolling including intermediate annealing. The thickness of the formed cold-rolled sheet may be 0.10 to 0.50 mm, specifically 0.30 to 0.40 mm.

In the cold-rolling step, the reduction ratio may be 50 to 95%.

In the annealing of the cold-rolled sheet, the annealing temperature is not particularly limited as long as the temperature is generally applied to the cold-rolled sheet annealing of the non-oriented electrical steel sheet. However, since the cold-rolled sheet annealing process is an important factor that greatly affects the microstructure and the texture of the non-oriented electrical steel sheet to influence the magnetic properties, the conditions need to be more closely controlled.

The iron loss of the non-oriented electrical steel sheet is closely related to the grain size. The iron loss of the non-oriented electrical steel sheet may be divided into hysteresis loss and eddy current loss, wherein the hysteresis loss decreases as the grain size increases, and the eddy current loss increases as the grain size increases, so that there is an appropriate grain size that minimizes the sum of the hysteresis loss and the eddy current loss. Therefore, at a large scale, it is important to derive and apply a cold-rolled sheet annealing temperature capable of securing an optimal grain size, and it is appropriate that a cracking temperature during cold-rolled sheet annealing is 900 to 1100°C. During the cold-rolled sheet annealing, if the cracking temperature is less than 900°C, the grains are too fine and hysteresis loss increases, and if the cracking temperature exceeds 1100°C, the grains are too coarse and the eddy current loss increases, and as a result, the iron loss is degraded, and thus, the cracking temperature may be controlled to 900 to 1100°C.

However, from a microscopic viewpoint, even if the grain size is the same, the iron loss may be reduced more as the uniformity of the microstructure is excellent. Even if the average grain size is similar, the iron loss is inferior as the number of very fine grains and very coarse grains is greater than that of the average grains, so that as the uniformity of the microstructure is secured, the magnetic properties may be improved.

In the cold-rolled sheet annealing step of the cold-rolled sheet; the average heating rate from 600°C to the crack annealing temperature during the cold-rolled sheet annealing may be 15 to 50°C/s, and the average cooling rate from the cracking temperature during the cold-rolled sheet annealing to 600°C may be 10 to 40°C/s. Specifically, the heating rate may be 20 to 40°C/s, and the cooling rate may be 10 to 30°C/s. If the heating rate is less than 15°C/s, there may be a problem in that the fraction of the texture that is unfavorable to magnetic properties increases to degrade magnetic properties, and if the heating rate exceeds 50°C/s, there may be a problem of degrading magnetic properties due to non-uniform grains. If the cooling rate is less than 10°C/s, there may be a problem in that the fraction of the texture that is unfavorable to magnetic properties increases, increases, and if the cooling rate exceeds 40°C/s, there may be a problem in that the residual stress present in the sheet after annealing increases to degrade magnetic properties.

In addition, in the annealing of the cold-rolled sheet, the heating rate and the cooling rate may satisfy Equation 2 below.

$$[\text{Equation 2}] \quad 200 \leq ([\text{heating rate}] \times [\text{cooling rate}]) \leq 500$$

(Here, [heating rate] and [cooling rate] are an average heating rate and an average cooling rate between 600°C and the cracking temperature during cold-rolled sheet annealing, respectively, and the unit is °C/s)

The method of manufacturing the non-oriented electrical steel sheet may further include coating an insulating film on the annealed cold-rolled sheet.

The insulating film may be an organic, inorganic, or organic-inorganic composite film, and may be other insulating film.

The non-oriented electrical steel sheet manufactured by the method for manufacturing the non-oriented electrical steel sheet may have FGS (average grain size of grains in the lower 10% or less based on grain size among total grains) $\geq 15 \ \mu m$. The non-oriented electrical steel sheet may have FGS (average grain size of grains in the lower 10% or less based on grain size among total grains)/GS (average grain size of total grains) ≥ 0.15. The non-oriented electrical steel sheet may have FGA (average area of grains in the lower 10% or less based on grain size among total grains)/TGA (average area of total grains) ≥ 0.005.

In addition, the non-oriented electrical steel sheet manufactured by the method for manufacturing the non-oriented electrical steel sheet may have iron loss $W_{15/50}$ of 2.0 W/kg or less, and iron loss $W_{10/400}$ of 16.5 W/kg or less.

Hereinafter, the present invention will be described in more detail with reference to the following Examples. However, these Examples are only illustrative of the present invention, and the present invention is not limited thereto.

**Example 1 - Comparison according to Mn, Cu, S contents**

Steel ingots composed as shown in Table 1 below were manufactured through vacuum dissolution, and the addition amounts of Mn, S, and Cu by changing the amounts of Mn, S, and Cu, and effects of the following [Equation 1] on the uniformity of a microstructure (size, fraction, and area of fine grains) and magnetic properties was examined.

$$[Equation 1]$$

$$0.4 \leq ([Mn]+10\times[Cu])\times 1000\times[S] \leq 1.5$$

(Here, [Mn], [Cu], and [S] are the addition amounts (wt%) of Mn, Cu, and S, respectively)

Each steel ingot was heated at 1160°C, hot-rolled to a thickness of 2.4 mm, and then wound. The hot-rolled steel sheet wound and cooled in air was subjected to hot-rolled sheet annealing and pickling at 1000°C, then cold-rolled to a thickness of 0.35 mm, and finally subjected to cold-rolled sheet annealing. In this case, the cold-rolled sheet annealing cracking temperature was performed between 950 and 1100°C, and the heating rate during annealing was 23°C/s and the cooling rate was 13°C/s, so as to satisfy the following [Equation 2].

$$[Equation 2]\ 200 \leq ([heating\ rate] \times [cooling\ rate]) \leq 500$$

(Here, [heating rate] and [cooling rate] are an average heating rate and an average cooling rate between 600°C and the cold-rolled sheet annealing cracking temperature during cold-rolled sheet annealing, respectively, and the unit is °C/s)

For each specimen, the microstructure was observed and the grain size was analyzed, and through Epstein sample processing, iron loss $W_{15/50}$, which was average loss of the rolling direction and the vertical direction of the rolling direction when a magnetic flux density of 1.5 T is induced at a frequency of 50 Hz, and iron loss $W_{10/400}$, which was average loss of the rolling direction and the vertical direction of the rolling direction when a magnetic flux density of 1.0 T is induced at a frequency of 400 Hz, were measured and the results thereof were shown in Table 2 below.

(Table 1)

| Steel type (wt%) | C | Si | Mn | P | S | Al | Ti | N | Cu |
|---|---|---|---|---|---|---|---|---|---|
| A1 | 0.002 5 | 2.9 | 0.5 8 | 0.00 7 | 0.005 9 | 1.0 | 0.003 6 | 0.003 2 | 0.001 5 |
| A2 | 0.003 | 3.7 | 0.3 1 | 0.00 3 | 0.003 5 | 0.5 | 0.002 6 | 0.003 5 | 0.004 9 |
| A3 | 0.003 8 | 3.4 | 0.0 2 | 0.01 0 | 0.003 8 | 1.2 | 0.000 9 | 0.001 9 | 0.008 0 |
| A4 | 0.003 | 3.3 | 0.5 8 | 0.00 7 | 0.000 7 | 0.6 | 0.001 7 | 0.003 8 | 0.010 8 |
| A5 | 0.001 9 | 3.0 | 0.8 8 | 0.00 6 | 0.001 5 | 0.7 | 0.000 8 | 0.001 8 | 0.002 6 |
| A6 | 0.003 1 | 3.6 | 0.2 0 | 0.00 5 | 0.001 3 | 0.7 | 0.002 5 | 0.003 8 | 0.004 6 |
| A7 | 0.004 5 | 2.9 | 0.4 0 | 0.01 0 | 0.001 6 | 0.8 | 0.001 9 | 0.002 2 | 0.006 9 |
| A8 | 0.002 3 | 2.9 | 0.5 4 | 0.00 5 | 0.002 5 | 0.9 | 0.001 0 | 0.000 7 | 0.005 6 |
| A9 | 0.003 2 | 3.2 | 0.8 7 | 0.00 6 | 0.001 0 | 1.1 | 0.001 9 | 0.002 2 | 0.005 |
| A10 | 0.003 9 | 3.2 | 1.1 3 | 0.00 6 | 0.002 3 | 0.7 | 0.000 7 | 0.001 7 | 0.006 2 |
| A11 | 0.002 5 | 2.9 | 0.7 5 | 0.00 6 | 0.003 3 | 0.8 | 0.001 2 | 0.002 3 | 0.007 4 |

(Table 2)

| Steel type | [Equation 1] | Cold-rolled sheet annealing temperature (°C) | GS (μm) | FGS (μm) | FGS/GS | FGA/TGA | Iron loss, $W_{15/50}$ (W/Kg) | Iron loss, $W_{10/400}$ (W/Kg) | Note |
|---|---|---|---|---|---|---|---|---|---|
| A1 | 3.51 | 1030 | 103 | 14 | 0.14 | 0.003 | 2.28 | 17.9 | Comparative Example |
| A2 | 1.26 | 1010 | 117 | 26 | 0.22 | 0.016 | 1.85 | 15.9 | Inventive Example |
| A3 | 0.38 | 960 | 95 | 13 | 0.14 | 0.004 | 2.19 | 17.7 | Comparative Example |
| A4 | 0.48 | 1020 | 93 | 13 | 0.14 | 0.004 | 2.15 | 16.8 | Comparative Example |
| A5 | 1.36 | 1060 | 154 | 24 | 0.16 | 0.009 | 1.88 | 15.8 | Inventive Example |
| A6 | 0.32 | 980 | 91 | 13 | 0.14 | 0.005 | 2.13 | 17.2 | Comparative Example |
| A7 | 0.75 | 990 | 121 | 21 | 0.17 | 0.017 | 1.96 | 16.2 | Inventive Example |
| A8 | 1.49 | 970 | 116 | 19 | 0.16 | 0.010 | 1.94 | 15.5 | Inventive Example |
| A9 | 0.92 | 1050 | 142 | 25 | 0.18 | 0.012 | 1.86 | 16.1 | Inventive Example |
| A10 | 2.74 | 950 | 86 | 12 | 0.14 | 0.003 | 2.23 | 17.3 | Comparative Example |
| A11 | 2.72 | 1030 | 97 | 14 | 0.14 | 0.004 | 2.31 | 17.7 | Comparative Example |

In Table 2, FGS was the average grain size of grains in the lower 10% or less based on grain size among total grains, GS was the average grain size of total grains, FGA was the average area of grains in the lower 10% or less based on grain size among total grains, and TGA was the average area of total grains.

As shown in Table 2, A2, A5, A7, A8, and A9 which satisfied both each component addition range of Si, Al, Mn, S, and Cu of the present invention and Equation 1 all satisfied relations of FGS (average grain size of grains in the lower 10% or less based on grain size among total grains) $\geq$ 15 $\mu$m, FGS (average grain size of grains in the lower 10% or less based on grain size among total grains)/GS (average grain size of total grains) $\geq$ 0.15, and FGA (average area of grains in the lower 10% or less based on grain size among total grains)/TGA (average area of total grains) $\geq$ 0.005. As a result, iron loss $W_{15/50}$ and $W_{10/400}$ were very excellent.

On the other hand, A1 did not satisfy the controlled content range of each of Si and Cu, did not satisfy Equation 1, and as a result, did not satisfy the relations of FGS (average grain size of grains in the lower 10% or less based on grain size among total grains) $\geq$ 15 $\mu$m, FGS (average grain size of grains in the lower 10% or less based on grain size among total grains)/GS (average grain size of total grains) $\geq$ 0.15, and FGA (average area of grains in the lower 10% or less based on grain size among total grains)/TGA (average area of total grains) $\geq$ 0.005. As a result, iron loss $W_{15/50}$ and $W_{10/400}$ were degraded.

A3 and A10 did not satisfy the controlled content range of Mn, did not satisfy Equation 1, and as a result, did not satisfy the relations of FGS (average grain size of grains in the lower 10% or less based on grain size among total grains) $\geq$ 15 $\mu$m, FGS (average grain size of grains in the lower 10% or less based on grain size among total grains)/GS (average grain size of total grains) $\geq$ 0.15, and FGA (average area of grains in the lower 10% or less based on grain size among total grains)/TGA (average area of total grains) $\geq$ 0.005. As a result, iron loss $W_{15/50}$ and $W_{10/400}$ were degraded.

A4 satisfied Equation 1, but did not satisfy the controlled content range of each of Si and Cu, and as a result, did also not satisfy the relations of FGS (average grain size of grains in the lower 10% or less based on grain size among total grains) $\geq$ 15 $\mu$m, FGS (average grain size of grains in the lower 10% or less based on grain size among total grains)/GS (average grain size of total grains) $\geq$ 0.15, and FGA (average area of grains in the lower 10% or less based on grain size among total grains)/TGA (average area of total grains) $\geq$ 0.005. As a result, iron loss $W_{15/50}$ and $W_{10/400}$ were degraded.

Meanwhile, A6 and A11 satisfied the controlled content range of each of Mn, S and Cu, but did not satisfy Equation 1, and did also not satisfy the relations of FGS (average grain size of grains in the lower 10% or less based on grain size among total grains) $\geq$ 15 $\mu$m, FGS (average grain size of grains in the lower 10% or less based on grain size among total grains)/GS (average grain size of total grains) $\geq$ 0.15, and FGA (average area of grains in the lower 10% or less based on grain size among total grains)/TGA (average area of total grains) $\geq$ 0.005. As a result, iron loss $W_{15/50}$ and $W_{10/400}$ were degraded.

**Example 2 - Control of cold-rolled sheet annealing heating and cooling rates**

Steel ingots composed as shown in Table 3 below were manufactured through vacuum dissolution, and the addition amounts of Mn, S, and Cu by changing the amounts of Mn, S, and Cu, and effects of the following [Equation 1] and heating rate and cooling rate conditions during cold-rolled sheet annealing on the uniformity of a microstructure (size, fraction, and area of fine grains) and magnetic properties were examined.

[Equation 1]

$$0.4 \leq ([Mn]+10\times[Cu])\times 1000 \times [S] \leq 1.5$$

(Here, [Mn], [Cu], and [S] are the addition amounts (wt%) of Mn, Cu, and S, respectively)

Each steel ingot was heated at 1190°C, hot-rolled to a thickness of 2.3 mm, and then wound. The hot-rolled steel sheet wound and cooled in air was subjected to hot-rolled sheet annealing and pickling at 1050°C, then cold-rolled to a thickness of 0.35 mm, and finally subjected to cold-rolled sheet annealing. In this case, a cold-rolled sheet annealing target temperature was performed between 950 and 1100°C, and the heating rate and the cooling rate were changed differently during annealing to confirm the effect according to [Equation 2] below.

[Equation 2] $200 \leq ([heating\ rate] \times [cooling\ rate]) \leq 500$

(Here, [heating rate] and [cooling rate] are an average heating rate and an average cooling rate between 600°C and the maximum temperature during cold-rolled sheet annealing, respectively, and the unit is °C/s)

For each specimen, the grain size was analyzed by observing the microstructure, and iron losses $W_{15/50}$ and $W_{10/400}$ were measured through Epstein sample processing, and the results were shown in Table 4 below.

(Table 3)

| Steel type | C | Si | Mn | P | S | Al | Ti | N | Cu | Sn |
|---|---|---|---|---|---|---|---|---|---|---|
| B1 | 0.00 34 | 3.3 | 0.25 | 0.00 4 | 0.00 25 | 0.91 | 0.00 23 | 0.00 14 | 0.00 69 | 0.01 |
| B2 | 0.00 14 | 2.9 | 0.83 | 0.01 4 | 0.00 11 | 1.12 | 0.00 4 | 0.00 21 | 0.00 48 | - |
| B3 | 0.00 42 | 3.6 | 0.25 | 0.00 3 | 0.00 4 | 1.19 | 0.00 42 | 0.00 38 | 0.00 87 | 0.06 |
| B4 | 0.00 08 | 2.9 | 0.76 | 0.00 8 | 0.00 18 | 1.30 | 0.00 04 | 0.00 20 | 0.00 66 | - |
| B5 | 0.00 30 | 3.0 | 0.08 | 0.00 8 | 0.00 15 | 0.65 | 0.00 15 | 0.00 19 | 0.00 56 | 0.03 |
| B6 | 0.00 08 | 2.6 | 0.58 | 0.01 0 | 0.00 18 | 0.57 | 0.00 28 | 0.00 17 | 0.00 65 | 0.02 |
| B7 | 0.00 23 | 3.0 | 0.36 | 0.00 5 | 0.00 17 | 0.66 | 0.00 33 | 0.00 08 | 0.00 63 | - |
| B8 | 0.00 37 | 3.5 | 0.32 | 0.00 6 | 0.00 39 | 0.82 | 0.00 29 | 0.00 24 | 0.00 55 | 0.05 |
| B9 | 0.00 17 | 2.9 | 0.71 | 0.01 3 | 0.00 2 | 0.83 | 0.00 15 | 0.00 25 | 0.00 28 | 0.08 |
| B10 | 0.00 24 | 2.8 | 0.66 | 0.01 3 | 0.00 17 | 1.25 | 0.00 06 | 0.00 24 | 0.00 22 | - |
| B11 | 0.00 37 | 3.4 | 0.43 | 0.01 2 | 0.00 34 | 0.91 | 0.00 22 | 0.00 12 | 0.01 13 | 0.02 |
| B12 | 0.00 34 | 3.7 | 0.56 | 0.00 6 | 0.00 21 | 0.97 | 0.00 11 | 0.00 24 | 0.00 76 | 0.01 |
| B13 | 0.0020 | 3.6 | 0.15 | 0.004 | 0.0008 | 1.07 | 0.0034 | 0.0022 | 0.0024 | 0.03 |

(Table 4)

| Steel type | [Equation 1] | Col drolled sheet annealing cracking temperature (°C) | Heating rate (°C/s) | Cooling rate (°C/s) | [Equation 2] | GS (μm) | FGS (μm) | FGS/GS | FGA/TGA | Iron loss, $W_{15/50}$ (W/Kg) | Iron loss, $W_{10/400}$ (W/Kg) | Note |
|---|---|---|---|---|---|---|---|---|---|---|---|---|
| B1-1 | 0.80 | 1010 | 45 | 27 | 1215 | 127 | 14 | 0.11 | 0.002 | 2.18 | 17.2 | Comparative Example |
| B1-2 | 0.80 | 1010 | 13 | 20 | 260 | 100 | 14 | 0.14 | 0.003 | 2.23 | 17.6 | |
| B1-3 | 0.80 | 1010 | 40 | 6 | 240 | 86 | 12 | 0.14 | 0.003 | 2.19 | 17.5 | Comparative Example |
| B1-4 | 0.80 | 1010 | 12 | 11 | 132 | 108 | 13 | 0.12 | 0.004 | 2.28 | 18.1 | Comparative Example |
| B2 | 0.97 | 1030 | 27 | 16 | 432 | 114 | 24 | 0.21 | 0.011 | 1.92 | 15.9 | Comparative Example |
| B3 | 1.35 | 1020 | 15 | 25 | 375 | 122 | 22 | 0.18 | 0.013 | 1.86 | 15.7 | Inventive Example |
| B4 | 1.49 | 960 | 55 | 32 | 1760 | 92 | 12 | 0.13 | 0.004 | 2.24 | 17.6 | Comparative Example |
| B5 | 0.20 | 1000 | 12 | 10 | 120 | 86 | 12 | 0.14 | 0.003 | 2.16 | 16.8 | Comparative Example |
| B6 | 1.16 | 980 | 27 | 15 | 405 | 100 | 19 | 0.19 | 0.006 | 1.97 | 16.3 | Inventive Example |
| B7 | 0.72 | 1060 | 30 | 14 | 420 | 87 | 20 | 0.23 | 0.007 | 1.89 | 15.9 | Inventive Example |
| B8 | 1.46 | 1020 | 24 | 58 | 1392 | 100 | 11 | 0.11 | 0.003 | 2.14 | 16.7 | Comparative Example |
| B9 | 1.48 | 1050 | 22 | 21 | 462 | 150 | 24 | 0.16 | 0.011 | 1.91 | 16.2 | Inventive Example |
| B10 | 1.16 | 1040 | 8 | 53 | 424 | 71 | 10 | 0.14 | 0.002 | 2.29 | 17.5 | Comparative Example |
| B11 | 1.85 | 1020 | 59 | 38 | 2242 | 127 | 14 | 0.11 | 0.004 | 2.15 | 17.00 | Comparative Example |

(continued)

| Steel type | [Equation 1] | Col drolled sheet annealing cracking temper ature (°C) | Heating rate (°C/s) | Cooling rate (°C/s) | [Equation 2] | GS (μm) | FGS (μm) | FGS/GS | FGA/TGA | Iron loss, $W_{15/50}$ (W/Kg) | Iron loss, $W_{10/400}$ (W/Kg) | Note |
|---|---|---|---|---|---|---|---|---|---|---|---|---|
| B12 | 1.34 | 980 | 45 | 11 | 495 | 82 | 18 | 0.22 | 0.008 | 1.88 | 15.6 | Inventive Example |
| B13 | 0.14 | 107 0 | 8 | 8 | 64 | 100 | 14 | 0.14 | 0.002 | 2.13 | 17.1 | Comparative Example |

The heating rate and the cooling rate were the average heating rate and cooling rate between 600°C and the maximum temperature during the cold-rolled sheet annealing, respectively. The descriptions of the FGS, GS, FGA, TGA and iron losses $W_{15/50}$ and $W_{10/400}$ were the same as in Example 1.

As shown in Table 4, B2, B3, B6, B7, B9, and B12 which satisfied all of each component addition range of Si, Al, Mn, S, and Cu of the present invention and Equation 1 and heating rate and cooling rate during cold-rolled sheet annealing and Equation 2 all satisfied relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were very excellent.

On the other hand, B1 satisfied both each component addition range of Si, Al, Mn, S, and Cu and Equation 1, also satisfied the heating rate and cooling rate ranges during the cold-rolled sheet annealing, but did not satisfied Equation 2, and as a result, did not satisfy the relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were degraded.

B4 satisfied both each component addition range of Si, Al, Mn, S, and Cu and Equation 1, but did not satisfy the management range of the heating rate during the cold-rolled sheet annealing and did not satisfy Equation 2, and as a result, did not satisfy the relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were degraded.

B5 did not satisfied both the component addition range of Mn and Equation 1, and did not satisfy Equation 2 during the cold-rolled sheet annealing, and as a result, did not satisfy the relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were degraded.

B8 satisfied both each component addition range of Si, Al, Mn, S, and Cu and Equation 1, but did not satisfy the cooling rate during the cold-rolled sheet annealing and Equation 2, and as a result, did not satisfy the relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were degraded.

B10 satisfied both each component addition range of Si, Al, Mn, S, and Cu and Equation 1, and satisfied Equation 2 during the cold-rolled sheet annealing, but did not satisfy the management ranges of the heating rate and the cooling rate, and as a result, did not satisfy the relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were degraded.

B11 did not satisfied the management range of Cu and Equation 1, and did not satisfy the heating rate during the cold-rolled sheet annealing and Equation 2, and as a result, did not satisfy the relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were degraded.

B13 did not satisfied the management range of S and Equation 1, and did not satisfy both the heating rate and the cooling rate during the cold-rolled sheet annealing and Equation 2, and as a result, did not satisfy the relations of FGS (average grain size of grains in the lower 10% or less based on grain size among total grains) ≥ 15 μm, FGS (average grain size of grains in the lower 10% or less based on grain size among total grains)/GS (average grain size of total grains) ≥ 0.15, and FGA (average area of grains in the lower 10% or less based on grain size among total grains)/TGA (average area of total grains) ≥ 0.005. As a result, iron loss $W_{15/50}$ and $W_{10/400}$ were degraded.

**Claims**

1. A non-oriented electrical steel sheet comprising, by wt%, 2.5 to 4% of Si, 0.1 to 1.0% of Mn, 0.001 to 0.005% of S, 0.002 to 0.01% of Cu, and the remainder of Fe and inevitable impurities, and
having FGS (average grain size of grains in the lower 10% or less based on grain size among total grains) ≥ 15 μm.

2. The non-oriented electrical steel sheet of claim 1, further comprising:
by wt%, at least one of 0.005% or less of C, 0.5 to 1.5% of Al, 0.005% or less of N, 0.2% or less of P, 0.2% or less of Sn, and 0.005% or less of Ti.

3. The non-oriented electrical steel sheet of claim 1, wherein
by wt%, at least one of 0.2% or less of Sb, 0.05% or less of Ni, 0.05% or less of Cr, 0.01% or less of Zr, 0.01% or less of Mo, and 0.01% or less of V.

4. The non-oriented electrical steel sheet of claim 1, wherein
the non-oriented electrical steel sheet has FGS (average grain size of grains in the lower 10% or less based on grain size among total grains)/GS (average grain size of total grains) ≥ 0.15.

5. The non-oriented electrical steel sheet of claim 1, wherein
the non-oriented electrical steel sheet has FGA (average area of grains in the lower 10% or less based on grain size among total grains)/TGA (average area of total grains) ≥ 0.005.

6. The non-oriented electrical steel sheet of claim 1, wherein

the composition of the non-oriented electrical steel sheet satisfies Equation 1 below.

[Equation 1]

$$0.4 \leq ([Mn]+10\times[Cu])\times 1000 \times [S] \leq 1.5$$

(Here, [Mn], [Cu], and [S] are the addition amounts (wt%) of Mn, Cu, and S, respectively)

7. A method for manufacturing a non-oriented electrical steel sheet comprising:

preparing a hot-rolled sheet by hot-rolling a slab comprising, by wt%, 2.0 to 4.0% of Si, 0.1 to 1.0% of Mn, 0.001 to 0.005% of S, 0.002 to 0.01% of Cu, and the remainder of Fe and inevitable impurities;
preparing a cold-rolled sheet by cold-rolling the hot-rolled sheet; and
annealing the cold-rolled sheet,
wherein in the cold-rolled sheet annealing step, an average heating rate from 600°C to the cracking temperature is 15 to 50°C/s, and an average cooling rate from the cracking temperature to 600°C is 10 to 40°C/s, and
the heating rate and the cooling rate satisfy Equation 2 below.

[Equation 2]

$$200 \leq ([heating\ rate] \times [cooling\ rate]) \leq 500$$

(Here, [heating rate] and [cooling rate] are an average heating rate and an average cooling rate between 600°C and the cracking temperature during cold-rolled sheet annealing, respectively, and the unit is °C/s)

8. The method for manufacturing the non-oriented electrical steel sheet of claim 7, wherein
the slab further comprises, by wt%, at least one of 0.005% or less of C, 0.5 to 1.5% of Al, 0.005% or less of N, 0.1% or less of P, 0.1% or less of Sn, and 0.005% or less of Ti.

9. The method for manufacturing the non-oriented electrical steel sheet of claim 7, wherein

the slab composition satisfies Equation 1 below.

[Equation 1]

$$0.4 \leq ([Mn]+10 \times [Cu]) \times 1000 \times [S] \leq 1.5$$

(Here, [Mn], [Cu], and [S] are the addition amounts (wt%) of Mn, Cu, and S, respectively)

10. The method for manufacturing the non-oriented electrical steel sheet of claim 7, wherein

in the annealing of the cold-rolled sheet,
the cracking temperature is 900 to 1100°C.

11. The method for manufacturing the non-oriented electrical steel sheet of claim 7, further comprising:
coating an insulating film on the annealed cold-rolled sheet, after the cold-rolled sheet annealing.

**EP 4 386 100 A1**

## INTERNATIONAL SEARCH REPORT

| | International application No. |
|---|---|
| | **PCT/KR2022/011879** |

**A. CLASSIFICATION OF SUBJECT MATTER**

**C22C 38/02**(2006.01)i; **C22C 38/04**(2006.01)i; **C22C 38/16**(2006.01)i; **C22C 38/06**(2006.01)i; **C22C 38/00**(2006.01)i; **C22C 38/58**(2006.01)i; **C21D 8/12**(2006.01)i

According to International Patent Classification (IPC) or to both national classification and IPC

**B. FIELDS SEARCHED**

Minimum documentation searched (classification system followed by classification symbols)

C22C 38/02(2006.01); C21D 1/74(2006.01); C21D 8/12(2006.01); C21D 9/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성 전기강판(non-oriented magnetic steel sheet), 열간 압연(hot rolling), 냉간 압연(cold rolling), 소둔(annealing), 가열 속도(heating velocity), 냉각 속도(cooling velocity), 균열 온도(crack temperature)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0078978 A (POSCO) 29 June 2021 (2021-06-29)<br>See claims 1-4. | 1-11 |
| Y | KR 10-2019-0127964 A (NIPPON STEEL CORPORATION) 13 November 2019 (2019-11-13)<br>See paragraphs [0136] and [0155]-[0165]. | 1-11 |
| A | KR 10-2012-0074032 A (POSCO) 05 July 2012 (2012-07-05)<br>See claims 1 and 4. | 1-11 |
| A | KR 10-2021-0078974 A (POSCO) 29 June 2021 (2021-06-29)<br>See paragraphs [0065]-[0075]. | 1-11 |
| A | WO 2014-049770 A1 (JFE STEEL CORP.) 03 April 2014 (2014-04-03)<br>See claims 1-4. | 1-11 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2022** | **08 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | | International application No. | | | |
|---|---|---|---|---|---|---|
| Information on patent family members | | | **PCT/KR2022/011879** | | | |

| Patent document cited in search report | | | Publication date (day/month/year) | Patent family member(s) | | | Publication date (day/month/year) |
|---|---|---|---|---|---|---|---|
| KR | 10-2021-0078978 | A | 29 June 2021 | KR | 10-2278897 | B1 | 16 July 2021 |
| | | | | WO | 2021-125685 | A2 | 24 June 2021 |
| | | | | WO | 2021-125685 | A3 | 05 August 2021 |
| KR | 10-2019-0127964 | A | 13 November 2019 | BR | 112019021222 | A2 | 28 April 2020 |
| | | | | CN | 110573643 | A | 13 December 2019 |
| | | | | CN | 110573643 | B | 27 October 2020 |
| | | | | EP | 3656885 | A1 | 27 May 2020 |
| | | | | EP | 3656885 | A4 | 14 April 2021 |
| | | | | JP | 6478004 | B1 | 06 March 2019 |
| | | | | KR | 10-2107439 | B1 | 07 May 2020 |
| | | | | TW | 201908498 | A | 01 March 2019 |
| | | | | TW | I683009 | B | 21 January 2020 |
| | | | | US | 11279985 | B2 | 22 March 2022 |
| | | | | US | 2020-0040423 | A1 | 06 February 2020 |
| | | | | WO | 2019-017426 | A1 | 24 January 2019 |
| KR | 10-2012-0074032 | A | 05 July 2012 | KR | 10-1223113 | B1 | 17 January 2013 |
| KR | 10-2021-0078974 | A | 29 June 2021 | KR | 10-2362666 | B1 | 11 February 2022 |
| WO | 2014-049770 | A1 | 03 April 2014 | BR | 112015006736 | A2 | 04 July 2017 |
| | | | | BR | 112015006736 | B1 | 05 February 2019 |
| | | | | CN | 104662180 | A | 27 May 2015 |
| | | | | CN | 104662180 | B | 09 June 2017 |
| | | | | EP | 2902508 | A1 | 05 August 2015 |
| | | | | EP | 2902508 | A4 | 30 September 2015 |
| | | | | EP | 2902508 | B1 | 05 April 2017 |
| | | | | IN | 2841DEN2015 | A | 11 September 2015 |
| | | | | JP | 5748029 | B2 | 15 July 2015 |
| | | | | KR | 10-1737871 | B1 | 19 May 2017 |
| | | | | KR | 10-2015-0040360 | A | 14 April 2015 |
| | | | | RU | 2600463 | C1 | 20 October 2016 |
| | | | | US | 2015-0243419 | A1 | 27 August 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016199787 A